# EUROPÄISCHE PATENTSCHRIFT

(11) **EP 1 796 187 B1**
(45) Veröffentlichungstag und Bekanntmachung des Hinweises auf die Patenterteilung: **15.09.2010**
(21) Anmeldenummer: 06022971.3
(22) Anmeldetag: 04.11.2006
(51) Int. Cl.: H01M 4/02, H01M 4/30, H01M 4/38

(54) **Vorrichtung und Verfahren zur Herstellung von Elektroden für Batterien**
Apparatus and procedure for the production of electrodes for batteries
Appareil et procedure pour la production d'électrodes pour batteries

(30) Priorität: 09.12.2005 DE 102005059375
(43) Veröffentlichungstag der Anmeldung: 13.06.2007
(73) Patentinhaber: Biotronik CRM Patent AG, 6341 Baar (CH)
(72) Erfinder: Fehrmann, Gerd, 01796 Pirna (DE); Fischer, Thomas, Dr., 01796 Pirna (DE); Hucke, Thomas, 01217 Dresden (DE); Staub, Roland, 01819 Berggiesshübel (DE); Drews, Jürgen, Dr., 01796 Pirna (DE); Traulsen, Tim, Dr., 01796 Pirna (DE)
(74) Vertreter: Lindner-Vogt, Karin L.

(56) Entgegenhaltungen:
- EP-A1- 0 307 209
- WO-A-02/052664
- GB-A- 1 073 294
- JP-A- 58 111 261
- US-A- 4 236 927
- US-A- 5 387 478

## Beschreibung

Die Erfindung betrifft ein Pulverpressverfahren zur Herstellung von Batterie-Elektroden und eine dazugehörige Pressvorrichtung.

Solche Herstellverfahren sind aus dem Stand der Technik bekannt.

Zum einen werden Batterie-Elektroden durch Nassbeschichtungsverfahren hergestellt. Bei diesen Verfahren wird das Pulver zusammen mit einem Bindemittel in einem Lösemittel dispergiert. Das Lösemittel wird hierbei so gewählt, dass es die Komponenten des Pulvers ausreichend benetzt und gleichzeitig eine ausreichend hohe Löslichkeit für das Bindemittel aufweist. Hierbei kommen wässrige Dispersionen oder Dispersionen auf Basis organischer Lösemittel (z.B. Alkohole, Ketone, Amine, Amide, Ether) zum Einsatz. Diese Dispersionen werden auf einen elektrisch leitfähigen Träger (z. B. Metalle, leitfähig beschichtete Polymere) aufgetragen und das Lösemittel durch Trocknung entfernt.

Die Nachteile dieses Verfahrens sind vielfältig. Die Herstellung der Dispersionen ist zeit- und kostenaufwendig und die Standzeiten der Dispersionen sind häufig durch Koagulation oder Sedimentation begrenzt. Weiterhin treten durch die Zersetzung des/der Lösemittel Nebenreaktionen auf, gegebenenfalls auch durch Nebenreaktionen mit den dispergierten Substanzen oder mit den gelösten Bindemitteln. Diese erniedrigen die Standzeiten der Beschichtungslösungen. Nachteile entstehen sowohl bei wässrigen Beschichtungslösungen als auch bei organischen Lösemitteln. Wässrige Beschichtungslösungen sind zwar ungiftig, lassen sich aber nur schwer trocknen. Lange Trockenzeiten oder hohe Trockentemperaturen sind erforderlich. Feuchtigkeitsempfindliche Materialien lassen sich nicht aus wässrigen Lösemitteln beschichten. Organische Lösemittel erfordern in der Regel einen hohen technischen Aufwand (Explosionsschutz, Brandschutz, Lösemittelrückgewinnung/Lösemittelverbrennung). Die Anforderungen an Arbeitsschutz (Toxizität, Geruchsbelästigung) sind in der Regel hoch. Eine quantitative Rückgewinnung ist in der Regel nicht möglich. Die Herstellung homogener Beschichtungen ist aufgrund der rheologischen Eigenschaften der Dispersionen technisch anspruchsvoll und kostenintensiv und die Trocknung solcher Beschichtungen erzeugt hohe Energiekosten und ist zeitaufwendig.

Vor allem in Lithium-Batterien ist die Auswahl der unter den Betriebsbedingungen der Batterie stabilen Bindemittel begrenzt. Vielfach sind nur fluorierte Polymere verwendbar. Diese sind häufig nur in speziellen, teuren, hoch siedenden organischen Lösemitteln löslich. Die Lösemittel erhöhen beim Trocknungsprozess die Porosität der Beschichtung. Zur Erhöhung der Energiedichte der Beschichtung sind daher nach dem Trocknen zusätzliche Arbeitsschritte zur Verdichtung der Elektroden notwendig (Pressen, Kalandrieren).

Weitere aus dem Stand der Technik bekannte Verfahren sind Pressverfahren. Bei diesen Verfahren werden Pulvermischungen zu Tabletten, Ringen oder Bechern (Presslingen) verpresst. Die Pulvermischungen können auch durch Extrusion zu Strängen oder Folien verarbeitet werden. Die elektrische Ableitung des Stromes erfolgt hierbei durch Auflaminieren eines metallischen Ableiters, gegebenenfalls mit Hilfe eines elektrisch leitfähigen Klebstoffes. Der Kontakt kann auch durch eine einfache Presskontaktierung erfolgen. Häufig wird die Ableitung durch eine Presskontaktierung mit dem Gehäuse der Batterie oder mit einem Nagel, der in den Pressling getrieben wird, sichergestellt.

Auch diese Verfahren haben Nachteile. So sind die Kontaktflächen der Presslinge bei Presskontaktierung in der Regel klein, die Belastbarkeit der Batterien ist begrenzt. Weiterhin wurden Nachteile festgestellt, wenn kein homogener Materialverbund (z. B. durch Schweißen) zwischen dem elektrisch leitfähigen Ableiter und dem Gehäuse hergestellt wird. Dann kann der Übergangswiderstand der Presskontaktierung im Verlauf des Batterielebens durch Ausbildung von Deckschichten, durch Gasentwicklung oder durch Korrosion ansteigen. Ein Anstieg des Übergangswiderstands von Presskontaktierungen wurde auch dann festgestellt, wenn der Druck, der auf den Presskontakt einwirkt, im Laufe des Batterielebens abnimmt. Die Ursache hierfür kann zum Beispiel eine Aufweitung des Gehäuses durch Schwellung der Batteriematerialien oder durch Gasentwicklung sein.

Bei hermetisch geschlossenen Batterien, bei denen keine Polymerdichtungen zur Abdichtung und Isolation von Gehäuseteilen verwendet werden können, kann nur eine Elektrode durch Presskontaktierung elektrisch leitend verbunden werden. Die andere Elektrode muss mit einer vom Batteriegehäuse isolierten Durchführung (z. B. einer Glas-Metall-Durchführung) elektrisch leitend mit dem Batteriegehäuse verbunden werden. Hierzu ist eine Verbindung der Elektrode mit einem elektrisch leitfähigen Ableiter (z. B. Draht, Folie, Gitter) erforderlich.

Ein weiterer gravierender Nachteil ist die geringe mechanische Stabilität der Presslinge. Wegen diesem Nachteil muss nach dem Stand der Technik eine ausreichend hohe Wanddicke erfolgen. Dies führt zu einer geringen elektrischen Belastbarkeit der Batterie. Zur mechanischen Stabilisierung kann das Pressverfahren direkt im Batteriegehäuse durchgeführt werden (z. B. bei Alkali-Mangan-Batterien). Dies erfordert ausreichende Materialstärken des Gehäuses und ist an geeignete Gehäusegeometrien (zylindrische Gehäuse) gebunden. Auch hat sich herausgestellt, dass die Lamination auf einen elektrisch leitfähigen Ableiter einen zusätzlichen, zeit- und kostenintensiven Arbeitsschritt darstellt.

Zur Herstellung von Batterie-Elektroden werden vielfach pulverförmige Materialien bzw. Mischungen pulverförmiger Materialien verwendet. Diese werden auf ein elektrisch leitfähiges Material beschichtet, welches als Stromableiter dient. Die pulverförmigen Materialen sind deswegen bevorzugt, weil sie poröse Strukturen mit großer Oberfläche gegenüber dem ionenleitenden Elektrolyten ausbilden. Hierdurch wird eine hohe Belastbarkeit der Batterie-Elektroden pro Fläche erreicht.

Die Erfindung hat die Aufgabe, die Entwicklung eines neuartigen Verfahrens und einer Vorrichtung zur Herstellung von Batterie-Elektroden aus Pulvermischungen bereitzustellen, die die aus dem Stand der Technik bekannten Nachteile beheben.

Die Aufgabe wird durch die unabhängigen Ansprüche 1 und 4 gelöst.

Zuerst wird eine Pulvermischung zur Herstellung einer positiven und/oder negativen Batterie-Elektrode in einer Einfüllkavität - vorzugsweise eine Matrize- bereitgestellt, dann wird ein elektrisch leitfähiger Ableiter mit einem oder mehreren nicht zu beschichtenden Teil(en) auf diese Pulvermischung und der / die nicht zu beschichtenden Teil(e) auf eine Matrize, welche als Auflagemittel ausgebildet ist, gelegt. Anschließend wird eine weitere Matrize, welche als Fixierungsmittel ausgebildet ist, auf den / die nicht zu beschichtenden Teil(e) des Ableiters. Danach wird auf diesen Ableiter eine weitere Menge derselben Pulvermischung aufgebracht. Abschließend wird die Pulvermischung mit dem elektrisch leitfähigen Ableiter unter Druck verdichtet.

Der elektrisch leitfähige Ableiter ist bevorzugt ein geätztes, geprägtes oder gestanztes metallisches Gitter oder ein Gitter aus Streckmetall. Es kann aber auch jede andere geeignete Form und/oder jedes andere geeignete Material für den elektrisch leitfähigen Ableiter vorgesehen werden.

Eine weitere Verfahrensvariante sieht vor, zuerst einen elektrisch leitfähigen Ableiter in Form eines metallischen Gitters in einer Einfüllkavität zu positionieren und dann die Pulvermischung bereit zu stellen. Die Pulvermischung rieselt dann durch das Gitter des elektrisch leitfähigen Ableiters hindurch und bildet unter- und oberhalb des Gitters eine vordefinierte Menge der Pulvermischung. Abschließend wird die Verdichtung unter Druck durchgeführt.

Vorteile dieses Verfahrens sind unter anderem, dass bei der Herstellung der Elektroden keine Lösemittel benötigt werden. Dadurch entfällt das Trocknen der Elektroden, da die eingesetzten pulverförmigen Ausgangsmaterialien bereits die für die spätere Anwendung erforderlichen Feuchtigkeiten aufweisen.

Weiterhin ist es nun möglich, sehr dünne Elektroden bei geringem Bindemittelgehalt herzustellen.

Ein Vorteil der Erfindung ist die Verbindung eines elektrisch leitfähigen Ableiters mit dem Pressling. Es wird ein Verfahren beschrieben, einen elektrisch leitfähigen Ableiter direkt, ohne Laminierung, in eine Pulvermischung zu integrieren.

Ein weiterer Vorteil besteht darin, dass keine zusätzlichen Arbeitsschritte zum Verdichten der Elektroden benötigt werden und die Verbindung der Elektrode mit dem elektrisch leitfähigen Ableiter in einem Arbeitsgang erfolgt. Dieses erfindungsgemäße Verfahren ermöglicht ebenso die Stabilisierung der Geometrie durch den elektrisch leitfähigen Ableiter.

Ein weiterer Bestandteil der Erfindung ist eine Vorrichtung, die es ermöglicht, Teile eines elektrisch leitfähigen Ableiters beim Verdichtungsvorgang nicht zu beschichten. Die Vorrichtung besteht aus einer Einfüllkavität, welche aus einer mehrteiligen Matrize besteht und in die die Pulvermischung zur Herstellung einer positiven und/oder negativen Batterie-Elektrode eingefüllt wird. Durch Verdichtungsmittel, die vorzugsweise aus einem Oberstempel und besonders bevorzugt aus einem Ober- und Unterstempel bestehen, wird das Pulvergemisch zusammen mit einem elektrisch leitfähigen Ableiter zusammengepresst und zu einer Batterie-Elektrode geformt.

Der elektrisch leitfähige Ableiter besteht aus zu beschichtenden und nicht zu beschichtenden Teilen. Die zu beschichtenden Teile sollen durch die Pulverpressung beschichtet werden. Um die nicht zu beschichtenden Teile eines elektrisch leitfähigen Ableiters vor einer Beschichtung und einer durch das Pressen erfolgenden Beschädigung zu schützen, wird der elektrisch leitfähige Ableiter in einem Auflager- und Gegenlager, welche von der mehrteiligen Matrize gebildet werden, positioniert. Die Auflager- und Fixierungsmittel bedecken den oder die nicht zu beschichtenden Teil(e).
Die Vorrichtung besteht beispielsweise aus einer zweigeteilten Einfüllkavität in Form von zwei Matrizen, zwischen die der elektrisch leitfähige Ableiter positioniert wird. In dieser Ausführungsform wird eine symmetrische Pressung durch zwei Verdichtungsmittel in Form eines Ober- und eines Unterstempels vorgenommen. Der zwischen den beiden Matrizen liegende elektrisch leitfähige Ableiter wird von beiden Seiten mit der Pulvermischung zusammen gepresst.

Vorzugsweise bestehen das Auflager und das Gegenlager aus Stiften, wobei das Auflager von einem federnd gelagerten Stift gebildet wird. Auf dem Auflager wird der nicht zu beschichtende Abschnitt des elektrisch leitfähigen Ableiters aufgelegt und dann mit dem weiteren Stift abgedeckt. Das Auflager ist so ausgelegt, dass es sich mit den bei der Pressung auftretenden Höhenänderungen in der Lage verändern kann und beim Verdichtungsvorgang somit das Verhältnis der Höhe der Teilmengen der Pulvermischungen über und unter dem elektrisch leitfähigen Ableiter im Wesentlichen erhalten bleibt.

Der Vorteil der Vorrichtung gegenüber dem Stand der Technik besteht darin, dass kein Abfall und kein Verschnitt möglich sind. Die Herstellung ermöglicht komplexe Geometrien, hervorragende Ausformung und hohe mechanische Stabilität der Batterie-Elektroden. Weiterhin sind hohe Arbeitsgeschwindigkeiten möglich.

Nachfolgend wird die Erfindung anhand von Ausführungsbeispielen und den dazugehörigen Zeichnungen näher erläutert. Es zeigen:
- Figur 1: Darstellung einer Druckpressvorrichtung und der Verfahren der asymmetrischen und symmetrischen Pressung aus dem Stand der Technik
- Figur 2: schematische Darstellung des Pulverpressverfahrens mit vorgepressten Presslingen und anschließendem Zusammenpressen mit einem elektrisch leitfähigen Ableiter
- Figur 3: bevorzugtes erfindungsgemäßes Verfahren zum Pressen einer Batterie-Elektrode
- Figur 4: weiteres bevorzugtes erfindungsgemäßes Verfahren zum Pressen einer Batterie-Elektrode
- Figur 5: Vorrichtung zur Herstellung von Batterie-Elektroden bestehend aus einem federnd gelagerten Auflager und einem Gegenlager zur Durchführung einer asymmetrischen Pressung
- Figur 6: Vorrichtung zur Herstellung von Batterie-Elektroden bestehend aus einer geteilten Einfüllkavität aus zwei Matrizen zur Durchführung einer symmetrischen Pressung

Die Pulvermischungen bestehen - wie aus dem Stand der Technik bekannt - aus dem Aktivmaterial der jeweiligen Batterie-Elektrode, Leitfähigkeitszusätzen, einem polymeren Bindemittel bzw. Mischungen verschiedener polymerer Bindemittel und gegebenenfalls Additiven.

Als Aktivmaterialien sind prinzipiell alle Elektrodenmaterialien geeignet, welche sich in Form eines Pulvers herstellen lassen. Es können sowohl Aktivmaterialien zur Herstellung von Kathoden als auch Aktivmaterialien zur Herstellung von Anoden verwendet werden. Die Aktivmaterialien können sowohl zur Herstellung von primären Batterien (d.h. nicht wiederaufladbaren Batterien) als auch zur Herstellung von sekundären Batterien (d.h. wiederaufladbaren Batterien) geeignet sein.

Beispiele für geeignete Aktivmaterialien für Kathoden sind Mangandioxid, dotierte Mangandioxide, Kupferoxyphoshat, Eisenphosphat, Lithium-Cobaltoxid, Lithium-Nickel-Cobaltoxide, Bor- oder Aluminium-dotierte Lithium-Cobaltoxide oder Lithium-Nickel-Cobaltoxide, Silber-Vanadium-Oxid oder fluorierte Kohlenstoffverbindungen.

Beispiele für geeignete Aktivmaterialien für Anoden sind Kohlenstoffverbindungen wie z. B. Graphite, oder Meso-Kohlenstoff-Verbindungen, Silizium oder Lithium-Titanate.

Besonders bevorzugt ist die Verwendung von Aktivmaterial mit Partikelgrößen > 10 µm und < 70 µm.

Als Leitfähigkeitszusätze eignen sich z. B. kugelförmige, kartoffelförmige, nadelförmige oder plättchenförmige Graphite, Ruße, expandierte Graphite oder Metallpulver. Besonders geeignet sind expandierte Graphite.

Besonders bevorzugt ist die Verwendung von Leitfähigkeitszusätzen mit Partikelgrößen > 50 nm und < 10 µm.

In Lithium-Batterien werden aufgrund ihrer hohen thermischen und chemischen Beständigkeit bevorzugt fluorhaltige Polymere als Bindemittel pulverbasierter Elektrodenmaterialien eingesetzt. Typische Polymere sind z. B. Polytetrafluorethylen (PTFE) oder Polyvinylidendifluorid (PvdF). Um eine möglichst hohe Energiedichte der Batterie zu erreichen - das heißt eine möglichst hohe Konzentration an Aktivmaterialien - wird der Bindemittelgehalt möglichst gering gewählt. Die Bindemittelkonzentration wird so gewählt, dass die notwendige mechanische Stabilität der Elektrode und die Haftung der Pulvermischung am elektrisch leitfähigen Ableiter gewährleistet sind. Als polymere Bindemittel den erfindungsgemäßen Pulvermischungen sind perfluorierte Polymere wie Polytetrafluorethylen (PTFE) oder teilfluorierte Polyolefine wie Polyvinylidendifluorid (PvdF) bevorzugt geeignet.

Besonders bevorzugt ist die Verwendung von Bindemitteln mit Partikelgrößen < 10 µm.

Additive sind für das hier beschriebene Verfahren nicht notwendig. Sie können jedoch zugesetzt werden, um die Eigenschaften der Pulvermischung, wie z. B. das Fließverhalten, oder die Eigenschaften der Elektrode, wie z. B. die Porosität, positiv zu beeinflussen. Prinzipiell geeignet sind z. B. nanoskalige Silizium- oder Titandioxide.

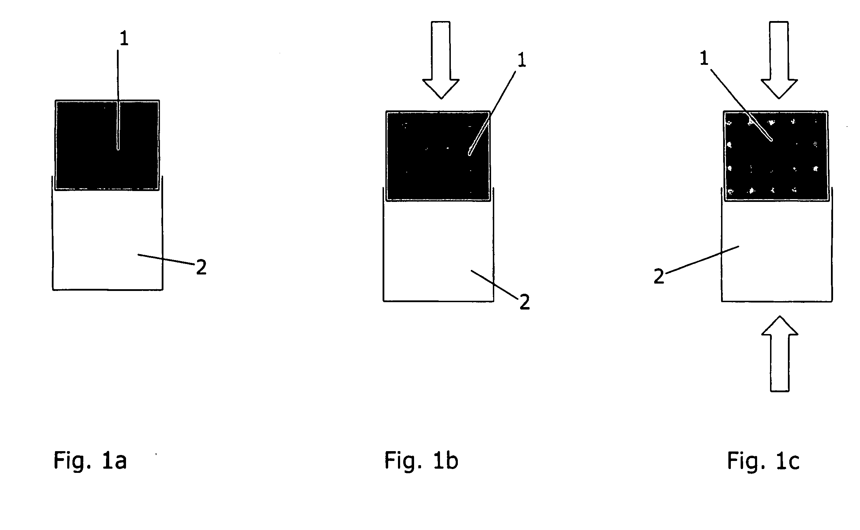

Figur 1a bis 1c zeigen die Verdichtungsmöglichkeiten des Pulvers mit einem Stempel-Matrize-Verfahren. Der Stempel (1) und die Matrize (2) sind in der gewünschten Elektrodengeometrie ausgeformt. Möglich sind runde, rechteckige, mehreckige, ovale, halbovale oder jegliche andere geeigneten Geometrien.

Die Matrize (2) wird mit der Pulvermischung gefüllt. Die Füllung erfolgt entweder volumetrisch oder gravimetrisch. Die Verdichtung des Pulvers erfolgt entweder durch alleiniges Ausüben von Druck auf den Stempel (1) (asymmetrische Verdichtung) - wie in Figur 1b dargestellt - oder durch das gleichzeitige Zusammenpressen von Matrize (2) und Stempel (1) (symmetrische Verdichtung), wie in Figur 1c dargestellt. Die symmetrische Verdichtung ist bevorzugt. Für die Verdichtung werden Kräfte zwischen 40 und 200 N/cm² verwendet.

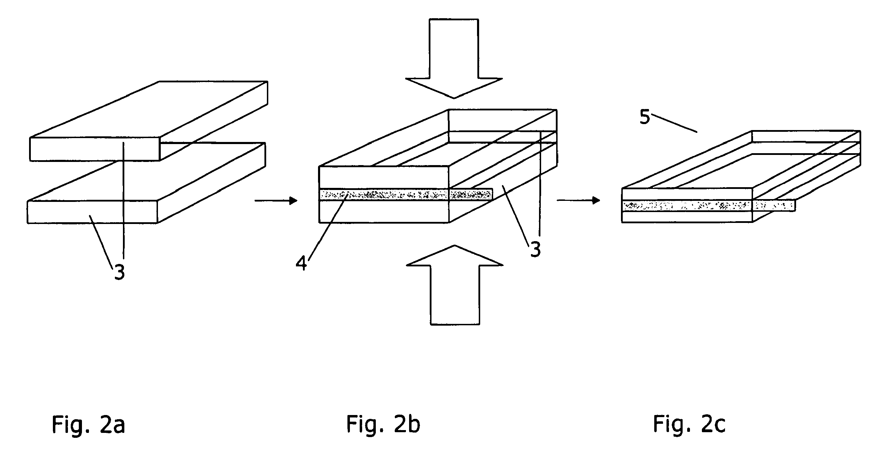

Die Figuren 2a bis 2c zeigen den schematischen Ablauf der Herstellung einer Batterie-Elektrode nach dem beschriebenen Verfahren, indem zuerst zwei homogene Presslinge (3) hergestellt werden. Ein elektrisch leitfähiger Ableiter (4), bevorzugt ein geätztes, geprägtes oder gestanztes metallisches Gitter oder ein Gitter aus Streckmetall, wird zwischen die Presslinge (3) gelegt. Im Unterschied zum genannten Stand der Technik werden die beiden Presslinge nicht mit dem elektrisch leitfähigen Ableiter verklebt, sondern die beiden Presslinge (3) werden in einem Pressvorgang mit dem Gitter zu einer Einheit (5) verpresst.

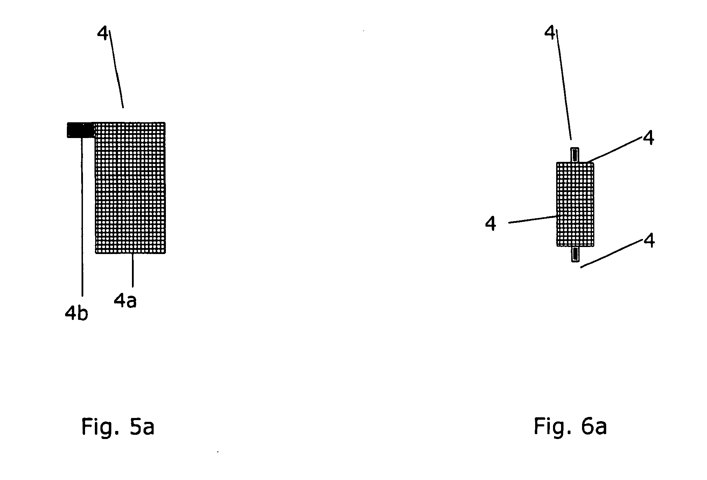

Der elektrisch leitfähige Ableiter wird genauer in den Figuren 5a und 6a dargestellt. Gebildet wird der elektrisch leitfähige Ableiter (4) aus einem zu beschichtenden Teil (4a), der durch gepresste Pulvermischung abgedeckt wird, und einem oder mehreren nicht zu beschichtenden Teil(en) (4b). Der zu beschichtende Teil (4a) ist bevorzugt ein geätztes, geprägtes oder gestanztes metallisches Gitter oder ein Gitter aus Streckmetall. Die nicht zu beschichtenden Teile (4b) sind als "Kontaktfähnchen" oder jede andere geeignete Kontaktmöglichkeit ausgebildet. Mit diesen nicht zu beschichtenden Teilen (4b) können elektrisch leitfähige Kontakte zum Batteriegehäuse oder zu einer Durchführung der Batterie, z. B. durch Schweißen, hergestellt werden.

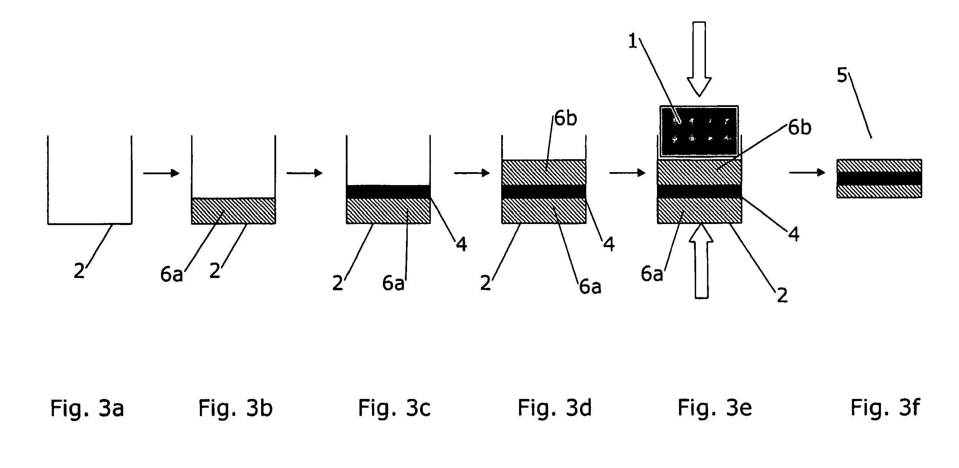

Die Figuren 3a bis 3f zeigen einen bevorzugten Verfahrensablauf zur Herstellung einer Batterieelektrode. In eine Einfüllkavität (2) - vorzugsweise eine Matrize - wird zunächst nur die Hälfte der Pulvermenge (6a) dosiert, welche für die Batterie-Elektrode (5) benötigt wird (Figur 3b). Der elektrisch leitfähige Ableiter (4), bevorzugt ein geätztes, geprägtes oder gestanztes metallisches Gitter oder ein Gitter aus Streckmetall, wird in die Matrize (2) eingelegt (Figur 3c) und daraufhin die andere Hälfte der Pulvermenge (6b), die für die Elektrode benötigt wird, in die Matrize (2) dosiert (Figur 3d). Anschließend wird die Pulvermenge mit dem bevorzugt mittig positionierten elektrisch leitfähigen Ableiter (4) mit Hilfe des Verdichtungsmittels (1) verdichtet (Figur 3e) und dadurch eine Batterie-Elektrode (5) hergestellt (Figur 3f).

Um ein "Einsinken" des elektrisch leitfähigen Ableiters (4) in die lose Pulvermischung (6) zu verhindern, kann die Pulvermischung (6) nach dem ersten Dosiervorgang durch einen Pressvorgang mit geringem Druck vorverdichtet werden.

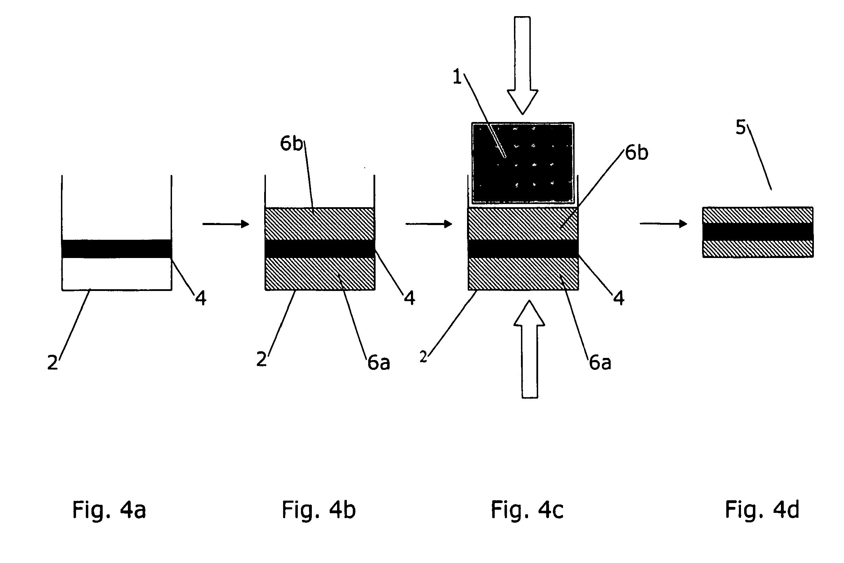

Die Figuren 4a bis 4d zeigen ein weiteres erfindungsgemäßes Pressverfahren. Der elektrisch leitfähige Ableiter (4), bevorzugt ein geätztes, geprägtes oder gestanztes metallisches Gitter oder ein Gitter aus Streckmetall, wird in der Matrize (2) positioniert (Figur 4a). Die für die Elektrode notwendige Pulvermenge (6) wird im Ganzen in die Matrize (2) dosiert, wobei die Hälfte des Pulvers durch den elektrisch leitfähigen Ableiter (2) rieselt (Figur 4b). Daraufhin wird die Pulvermenge (6) asymmetrisch mit Hilfe eines Verdichtungsmittels (1) verdichtet (Figur 4c). Nach dem Entformen erhält man die Batterie-Elektrode (5).

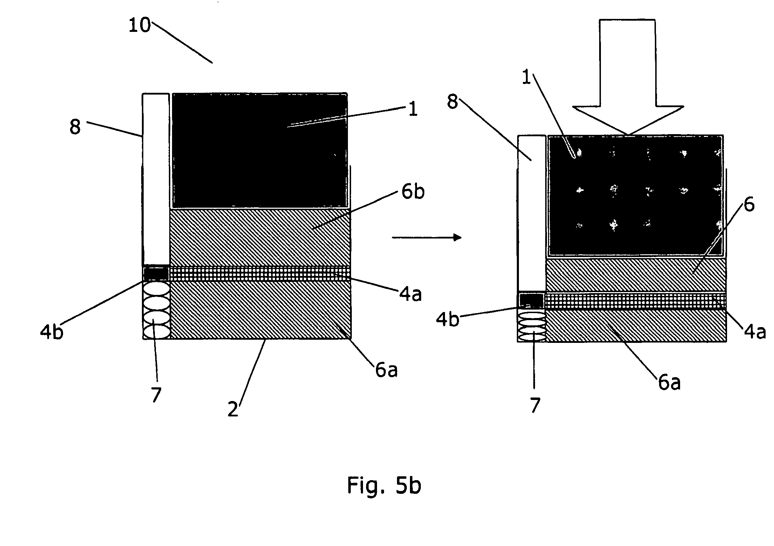

Figur 5b zeigt eine erfindungsgemäße Ausführungsform einer Vorrichtung (10) zur Herstellung einer Batterieelektrode, mit der das asymmetrische Pressverfahren, das in Figur 3 oder 4 beschrieben wird, durchgeführt werden kann. Der nicht zu beschichtende Teil (4b) des elektrisch leitenden Ableiters (4) wird auf ein federnd gelagertes Auflagemittel (7) aufgelegt. Auf den auf dem federnd gelagerten Auflagemittel (7) liegenden nicht zu beschichtenden Teil (4b) des elektrisch leitfähigen Ableiters (4) wird ein Fixierungsmittel (8) aufgelegt, so dass der Bereich des nicht zu beschichtenden Teils (4b) des elektrisch leitfähigen Leiters (4) sowohl von oben als auch von unten abgedeckt ist. Das zu verpressende Pulver (6) kann hierbei entweder vor dem Einlegen des elektrisch leitfähigen Ableiters (4) zur Hälfte eingefüllt werden oder aber - wenn der Ableiter ein Gitter ist - durch den elektrisch leitfähigen Ableiter (4) hindurch eingefüllt werden.

Sowohl das Auflagemittel (7) als auch das Fixierungsmittel (8) können aus einem Stift bestehen, wobei der Stift des Auflagemittels (7) federnd und vertikal verschiebbar gelagert ist.

Beim Verdichten der Pulvermischung (6) mit einem Stempel (1) wird das federnd gelagerte Auflager (7) so weit eingedrückt, wie es der Verdichtung der Pulvermischung (6) entspricht. Dies sorgt dafür, dass der nicht zu beschichtende Teil (4b) des elektrisch leitfähigen Ableiters (4) stets in der Ebene des Ableiters (4) positioniert bleibt und nicht während der Verdichtung der Pulvermischung (6) verbogen wird.

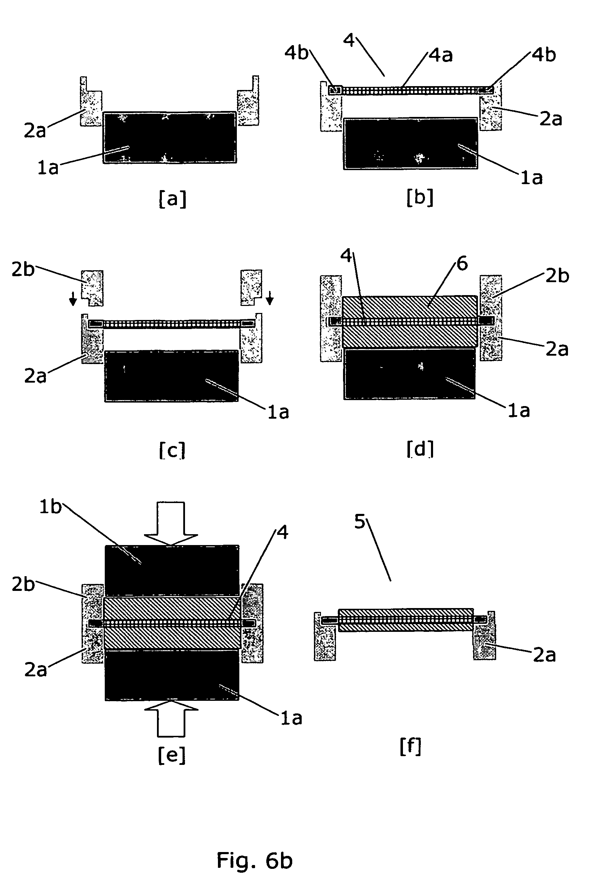

Figur 6b zeigt eine weite Ausführungsform der Vorrichtung zur Herstellung einer Batterie-Elektrode, mit der bevorzugt das in Figur 1c dargestellte symmetrische Pressverfahren durchgeführt werden kann. Beim Pressvorgang kann eine mehrteilige Matrize (2a und 2b) eingesetzt werden. Die Verdichtung wird hierbei mit zwei Verdichtungsmittel durchgeführt. Der Unterstempel (1a) wird in die untere Matrize (2a) eingeführt [a]. Der elektrisch leitfähige Ableiter (4), bevorzugt ein geätztes, geprägtes oder gestanztes metallisches Gitter oder ein Gitter aus Streckmetall wird so auf die untere Matrize (2a) aufgelegt, dass die nicht zu beschichtenden Teile (4b) des elektrisch leitfähigen Ableiters (4) auf dem oberen Rand der unteren Matrize (2a) aufliegen [b]. Die obere Matrize (2b) wird auf die untere Matrize (2a) aufgesetzt. Oberseite der unteren Matrize (2a) und Unterseite der oberen Matrize (2b) der Matrize sind so ausgeformt, das die "Fähnchen" (4b) in der Form eingeschlossen werden [c]. Die geschlossene mehrteilige Matrize (2) wird mit der Pulvermischung (6) gefüllt [d]. Anschließend wird der Oberstempel (1b) aufgesetzt und die Pulvermischung (6) symmetrisch verdichtet, in dem sich der obere und der untere Stempel (1a und 1b) unter Kraft aufeinander zu bewegen [e]. Abschließend werden die Stempel (1a) und (1b) zurückgezogen und das Oberteil der Matrize (2b) abgenommen. Die gepresste Batterie-Elektrode (5) kann entnommen werden. [f] zeigt die fertige Batterieelektrode auf der untere Matrize (2a) der mehrteiligen Matrize (2) liegend.

## Patentansprüche

1. Verfahren zur Herstellung einer Batterie-Elektrode (5) umfassend folgende Schritte:
- Einfüllen einer Pulvermischungsmenge (6a) in eine Kavität (2),
- Auflegen eines elektrisch leitfähigen Ableiters (4) mit einem oder mehreren nicht zu beschichtenden Teil(en) (4b) auf die Pulvermischung (6a) und Auflegen des / der nicht zu beschichtenden Teils / Teile auf eine Matrize (2a), welche als Auflagemittel (7) ausgebildet ist,
- Auflegen einer weiteren Matrize (2b), welche als Fixierungsmittel (8) ausgebildet ist, auf den nicht zu beschichtenden Teil(en) (4b) des Ableiters (4),
- Einfüllen einer weiteren Menge (6b) derselben Pulvermischung (6) in dieselbe Kavität (2),
- Verdichten der beiden Pulvermischungsmengen (6a, 6b).

2. Verfahren nach Anspruch 1, **dadurch gekennzeichnet, dass** die Pulvermischung (6):
- Aktivmaterial zur Herstellung von Batterie-Elektroden,
- Leitfähigkeitszusätze und
- Polymere Bindemittel
umfasst.

3. Verfahren nach Anspruch 1 oder 2, **dadurch gekennzeichnet, dass** der elektrisch leitfähige Ableiter (4) ein geätztes und/oder geprägtes und/oder gestanztes metallisches Gitter oder ein Gitter aus Streckmetall ist.

4. Vorrichtung zur Herstellung einer Batterie-Elektrode mit
- einer Einfüllkavität (2) für eine Pulvermischung (6), welche aus einer mehrteiligen Matrize besteht
- mindestens einem Verdichtungsmittel (1) zum Verdichten der Pulvermischung (6) und
- einem Auflage- (7) und Fixierungsmittel (8) zur Positionierung und Fixierung eines elektrisch leitfähigen Ableiters (4), wodurch der Ableiter (4) so angeordnet ist, dass sich über und unter dem Ableiter (4) jeweils eine Teilmenge (6a, 6b) der Pulvermischung (6) befindet,
**dadurch gekennzeichnet, dass**
das Auflagemittel (7) und das Fixierungsmittel (8) von der mehrteiligen Matrize gebildet werden, einen oder mehrere nicht zu beschichtende(n) Teil(e) (4b) des Ableiters (4) von oben und unten abdecken und derart angeordnet sind, dass das Verhältnis der Teilmengen (6a, 6b) der Pulvermischung (6) über und unter dem Ableiter (4) im Wesentlichen erhalten bleibt.

5. Vorrichtung nach Anspruch 4, **dadurch gekennzeichnet, dass** die mehrteilige Matrize aus zwei Matrizen (2a, 2b) besteht.

6. Vorrichtung nach Anspruch 4, **dadurch gekennzeichnet, dass** das mindestens eine Verdichtungsmittel als Unterstempel (1a) und Oberstempel (1b) ausgebildet ist.

7. Vorrichtung nach Anspruch 6, **dadurch gekennzeichnet, dass** ein Stempel (1a) den Boden der Einfüllkavität (2) bildet.

8. Vorrichtung nach Anspruch 6 oder 7, **dadurch gekennzeichnet, dass** sich beim Verdichten die Verdichtungsmittel (1a, 1b) aufeinander zu bewegen.

9. Vorrichtung nach Anspruch 4, **dadurch gekennzeichnet, dass** das Verdichtungsmittel als ein einziger Stempel ausgebildet ist.

10. Vorrichtung nach Anspruch 5, **dadurch gekennzeichnet, dass** die zweiteilige Matrize aus einer unteren Matrize (2a) und einer oberen Matrize (2b) besteht, wobei die untere Matrize, vorzugsweise der obere Rand der unteren Matrize, als Auflage- und die obere Matrize als Fixierungsmittel ausgebildet ist.

## Claims

1. A method for producing a battery electrode (5), comprising the following steps:
- filling a powder mixture quantity (6a) into a cavity (2),
- placing an electrically conductive divertor (4) having one or more parts (4b) not to be coated onto the powder mixture (6a) and placing the part or parts not to be coated onto a die (2a) configured as support means (7),
- placing a further die (2b), which is configured as a fixation means (8), onto the part(s) (4b) of the divertor (4) not to be coated,
- filling a further quantity (6b) of the same powder mixture (6) into the same cavity,
- compacting the two powder mixture quantities (6a, 6b).

2. The method according to claim 1, **characterized in that** the powder mixture (6) comprises:
- active material for producing battery electrodes,
- conductivity additives and
- polymeric binding agents.

3. The method according to claim 1 or 2, **characterized in that** the electrically conductive divertor (4) is an etched and/or punched and/or stamped metal grid or a grid made of expanded metal.

4. An apparatus for producing a battery electrode, comprising
- a filling cavity (2) for a powder mixture (6) composed of a multi-part die,
- at least one compaction means (1) for compacting the powder mixture (6) and
- a support (7) and fixation means (8) for positioning and fixing an electrically conductive divertor (4), the divertor (4) being disposed such that a partial quantity (6a, 6b) each of the powder mixture (6) is located above and below the divertor (4),
**characterized in that**
the support means (7) and the fixation means (8) are formed by the multi-part die, cover one or more parts (4b) of the divertor (4) not to be coated from above and beneath, and are disposed such that the ratio of the partial quantities (6a, 6b) of the powder mixture (6) above and below the divertor (4) remain substantially maintained.

5. The apparatus according to claim 4, **characterized in that** the multi-part die comprises two dies (2a, 2b).

6. The apparatus according to claim 4, **characterized in that** the at least one compaction means is configured as a lower plunger (1a) and an upper plunger (1b).

7. The apparatus according to claim 6, **characterized in that** a plunger (1 a) forms the bottom of the filling cavity (2).

8. The apparatus according to claim 6 or 7, **characterized in that** the compaction means (1a, 1b) move toward each other during compacting.

9. The apparatus according to claim 4, **characterized in that** the compaction means is configured as a single plunger.

10. The apparatus according to claim 5, **characterized in that** the two-part die comprises a lower die (2a) and an upper die (2b), wherein the lower die, preferably the edge of the lower die, is configured as a support means and the upper die is configured as a fixation means.

## Revendications

1. Méthode pour la fabrication d'une électrode de pile (5), comprenant les étapes suivantes :
- remplissage d'une cavité (2) avec une dose de mélange de poudre (6a).
- disposition d'un déflecteur électriquement conductible (4) comportant une ou plusieurs parties (4b) à ne pas être couvertes par le mélange de poudre (6a), et disposition de la partie/les parties à ne pas être couvertes sur une matrice (2a) configurée comme un moyen de support (7),
- disposition d'une autre matrice (2b), configurée comme un moyen de fixation (8), sur la/les partie(s) de la purge (4) à ne pas recouvrir,
- remplissage de la même cavité avec une dose supplémentaire (6b) du même mélange de poudre (6),
- compactage des deux doses de mélange de poudre (6a, 6b).

2. Méthode selon la revendication 1, **caractérisée en ce que** le mélange de poudre (6) comprend :
- un matériau actif pour la fabrication d'électrodes de pile,
- des additifs de conductivité, et
- des agents liants de polymères.

3. Méthode selon la revendication 1 ou 2, **caractérisée en ce que** le déflecteur électriquement conductible (4) est une grille métallique gravée et/ou perforée et/ou estampée ou encore une grille constituée de métal déployé.

4. Dispositif pour la fabrication d'électrodes de pile, comprenant
- une cavité de remplissage (2) pour un mélange de poudre (6), constituée d'une matrice à plusieurs parties,
- au moins un moyen de compactage (1) pour le compactage du mélange de poudre (6), et
- un support (7) et un moyen de fixation (8), pour le positionnement et la fixation d'un déflecteur électriquement conductible (4), le déflecteur (4) étant disposé de telle manière qu'une dose partielle (6a, 6b) de mélange de poudre (6) se trouve au-dessus et en-dessous du déflecteur (4),
**caractérisé en ce que**
le moyen de support (7) et le moyen de fixation (8) sont formés par la matrice à plusieurs parties, couvrent une ou plusieurs parties (4b) du déflecteur (4) à ne pas être couvertes au-dessus et en-dessous, et sont disposés de manière à maintenir substantiellement le ratio des doses partielles (6a, 6b) du mélange de poudre (6) au-dessus et en-dessous du déflecteur (4).

5. Dispositif selon la revendication 4, **caractérisé en ce que** la matrice à plusieurs parties comprend deux matrices (2a, 2b).

6. Dispositif selon la revendication 4, **caractérisé en ce que** l'au moins un moyen de compactage est configuré comme un piston inférieur (1a) et un piston supérieur (1b).

7. Dispositif selon la revendication 6, **caractérisé en ce qu'**un piston (1a) forme le fond de la cavité de remplissage (2).

8. Dispositif selon la revendication 6 ou 7, **caractérisé en ce que** les moyens de compactage (1a, 1 b) se déplacent l'un vers l'autre pendant le compactage.

9. Dispositif selon la revendication 4, **caractérisé en ce que** le moyen de compactage est configuré comme un seul piston.

10. Dispositif selon la revendication 5, **caractérisé en ce que** la matrice à deux parties comprend une matrice inférieure (2a) et une matrice supérieure (2b), parmi lesquelles la matrice inférieure, de préférence le bord de la matrice inférieure, est configuré(e) comme un moyen de support, et la matrice supérieure est configurée comme un moyen de fixation.
